# FASCICULE DE BREVET EUROPEEN

(11) **EP 0 653 825 B1**
(45) Date de publication et mention de la délivrance du brevet: **16.07.1997**
(21) Numéro de dépôt: 94410098.1
(22) Date de dépôt: 10.11.1994
(51) Int. Cl.: H02G 3/08

(54) **Dispositif de traversée étanche à membrane souple et opercule jetable**
Abgedichtete Durchführung mit einer biegsamen Membrane und einem Wegwerfdeckel
Sealed feedthrough with flexible membrane and disposable lid

(30) Priorité: 16.11.1993 FR 9313759
(43) Date de publication de la demande: 17.05.1995
(73) Titulaire: SCHNEIDER ELECTRIC SA, 92100 Boulogne Billancourt (FR)
(72) Inventeur: Buchy, Bernard, F-38050 Grenoble Cedex 09 (FR); Munsch, Richard, F-38050 Grenoble Cedex 09 (FR); Larsky, Pierre, F-38050 Grenoble Cedex 09 (FR); Carpentier, Philippe, F-38050 Grenoble Cedex 09 (FR); Wasner, Olivier, F-38050 Grenoble Cedex 09 (FR)
(74) Mandataire: Hecké, Gérard

(56) Documents cités:
- DE-B- 1 083 382
- FR-A- 2 464 585
- GB-A- 1 154 929

## Description

La présente invention concerne un dispositif de traversée étanche à membrane souple, notamment pour une enveloppe d'un équipement électrique, autorisant le passage étanche d'un élément de raccordement, notamment d'un conduit ou d'un câble, ce dispositif comprenant un bouchon de fermeture inséré dans une première ouverture de forme conjuguée ménagée dans au moins une paroi de ladite enveloppe.

On connaît de nombreux types de bouchons pour obturer les passages de câbles, de gaines ou de conduits tubulaires de guidage de fils ménagés dans les boîtiers pour appareillages électriques. Les boîtes de dérivation plus particulièrement, sont équipées de bouchons destinés à permettre le raccordement de conduits tubulaires souples ou rigides de différents diamètres. Parmi ces bouchons, le plus connu est une pièce conique réalisée en une matière synthétique souple et qui présente une suite de gorges coaxiales définissant autant de zones de rupture. Selon le diamètre du conduit à raccorder, l'utilisateur découpe la partie centrale du bouchon selon l'une ou l'autre des gorges annulaires, de manière à créer une ouverture centrale suffisante pour permettre le passage du conduit et une bague d'étanchéité périphérique entre le conduit et le bord de l'ouverture correspondante de la boîte.

D'autres techniques d'obturation ont été mises au point. Le brevet français N° 1'540'647 décrit un bouchon d'obturation des ouvertures de boîtes de dérivation ou similaires, réalisé d'une pièce en une matière synthétique souple et comportant une douille cylindrique obturée à une de ses extrémités par au moins une membrane pouvant être déchirée. L'introduction de fils électriques, de câbles ou de conduits de guidage de fils ou de câbles, s'effectue à travers cette membrane préalablement déchirée. L'élasticité de la membrane assure dans une certaine mesure l'étanchéité du passage vers l'intérieur de la boîte.

Une autre technologie a également vu le jour. Elle consiste à surmouler le boîtier, réalisé en une matière synthétique rigide et dont les parois latérales comportent des ouvertures pour le passage des conduits de guidage ou des câbles électriques, au moyen d'un film fin d'une matière élastomère. Les ouvertures sont obturées par une membrane constituée par ce film, et l'introduction des câbles, ou des conduits de guidage, s'effectue à travers cette membrane préalablement percée.

Ces techniques présentent des inconvénients divers et notamment celui d'imposer à l'utilisateur une intervention délicate, au moyen d'un outil de coupe, pour créer une ouverture permettant le passage des conduits ou des câbles, avec le risque de déchirure possible nuisant à l'étanchéité finale après mise en place du conduit électrique.

La présente invention se propose de pallier ces inconvénients en réalisant un dispositif de traversée conçu pour éviter à l'utilisateur tout recours à un outil de coupe pour délimiter une ouverture permettant le passage d'un conduit ou d'un câble.

Le dispositif de traversée selon l'invention est caractérisé en ce que ledit bouchon de fermeture comporte une membrane souple ayant au moins une deuxième ouverture centrale de diamère inférieur à celui de la première ouverture , et un bourrelet périphérique annulaire, à l'intérieur duquel est inséré un opercule rigide comportant un renflement central agencé pour être logé dans la deuxième ouverture centrale de la membrane souple, la somme des épaisseurs de la membrane souple et de l'opercule rigide étant sensiblement égale à l'épaisseur de la paroi de l'enveloppe.

La présente invention sera mieux comprise en référence à la description d'un mode de réalisation préféré donné à titre d'exemple non limitatif et aux dessins annexés dans lesquels:
la figure 1 représente une vue en coupe transversale d'une première forme de réalisation du dispositif de traversée selon l'invention,
la figure 2 représente une vue en coupe d'une deuxième forme de réalisation du dispositif de traversée selon l'invention,
la figure 3 représente le dispositif de la figure 2 monté dans une ouverture d'une paroi d'un boîtier, et
les figures 4A à 4F illustrent les étapes successives de préparation et d'utilisation du dispositif de traversée selon l'invention,
la figure 5 montre une plaque passe-câbles équipée d'une pluralité d'entrées de diamètres différents,
la figure 6 est une coupe selon la ligne 6-6 de la figure 5.

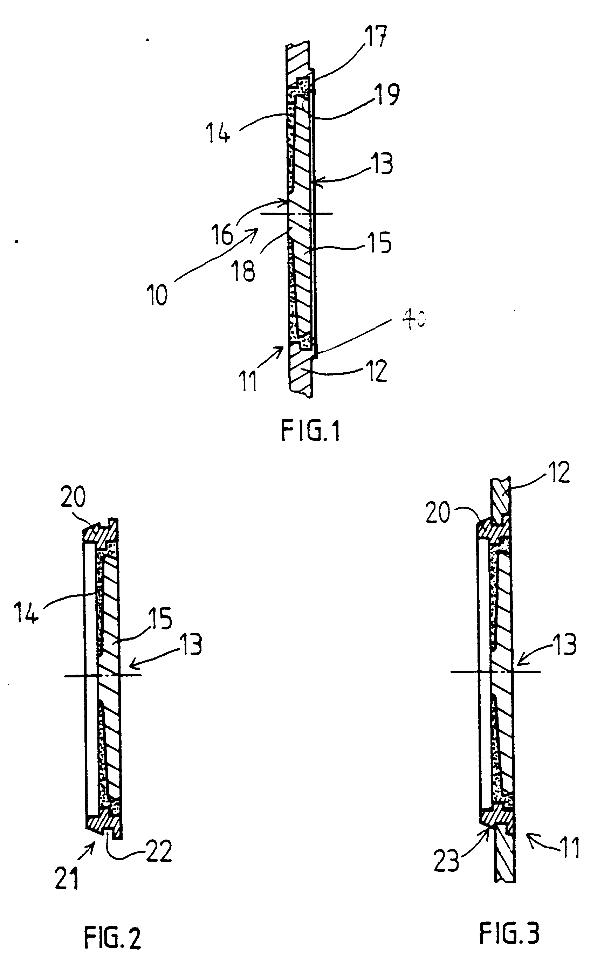

En référence à la figure 1, le dispositif de traversée étanche 10, destiné à obturer une ouverture 11 ménagée dans une paroi 12 d'une enveloppe, tel que par exemple une boîte de dérivation, comporte un bouchon de fermeture 13 qui est constitué par une membrane souple 14 de forme annulaire et par un opercule rigide 15 au moins partiellement superposé à cette membrane.

Dans la réalisation représentée par cette figure, le bouchon de fermeture a une forme circulaire, mais il pourrait également être polygonal, par exemple carré. La membrane souple présente au moins une ouverture centrale 16 dont le diamètre est très inférieur à celui de l'ouverture 11 de la paroi 12 de l'enveloppe. A sa périphérie, cette membrane comporte un bourrelet annulaire 17 dont l'épaisseur est, dans ce cas, sensiblement égale à celle de la paroi 12 de l'enveloppe. Cette membrane est réalisée en un matériau ayant des propriétés élastomères. L'opercule rigide 15 a une forme générale de disque pourvu d'un renflement central 18 qui est emboîté dans l'ouverture centrale 16 de la membrane souple. L'épaisseur de l'opercule est, dans ce cas, telle que la somme des épaisseurs de la membrane souple et de l'opercule rigide est sensiblement égale à l'épaisseur de la paroi 12 de l'enveloppe. Ceci est vrai aussi bien dans la zone où l'opercule est superposé à la membrane que dans la partie centrale où l'épaisseur de la membrane est nulle et celle de l'opercule est maximale et dans la zone périphérique occupée par le bourrelet annulaire 17. L'opercule est réalisé en une matière synthétique rigide qui n'adhère pas ou que très peu à la membrane souple. La liaison entre ces deux éléments est mécanique ou physico-chimique. Dans le cas d'une liaison mécanique, l'opercule s'emboîte dans le bourrelet annulaire 17 qui présente à cet effet une paroi intérieure 19 légèrement inclinée qui assure la retenue par friction de l'opercule 15.

La tenue mécanique de l'opercule 15 dans le bouchon de fermeture 13 peut être renforcée en prévoyant une collerette 40 protubérante sur la face externe de l'enveloppe 12 au droit de l'ouverture 11. La collerette 40 présente une forme annulaire de diamètre légèrement inférieur à celui de la membrane 14 souple.

Les figures 2 et 3 représentent une autre forme de réalisation dans laquelle le bouchon de fermeture 13, identique à celui de la figure 1, est inséré dans une bague à emboîtement 20 qui constitue une pièce intermédiaire entre ledit bouchon et la paroi 12 d'une enveloppe. Pour assurer la tenue de la bague à emboîtement sur la paroi 12 de l'enveloppe, cette bague comporte des moyens de liaison 21 comprenant une gorge 22 périphérique et une rampe 23. La gorge 22 est agencée pour recevoir une protubérance complémentaire solidaire de la paroi de l'enveloppe. La rampe permet une mise en place par clipsage ou emboîtement dans l'ouverture 11 de l'enveloppe.

Cette réalisation est avantageuse en ce qu'elle permet une préfabrication du dispositif de traversée et une mise en place ultérieure de ce dispositif dans les ouvertures appropriées de l'enveloppe.

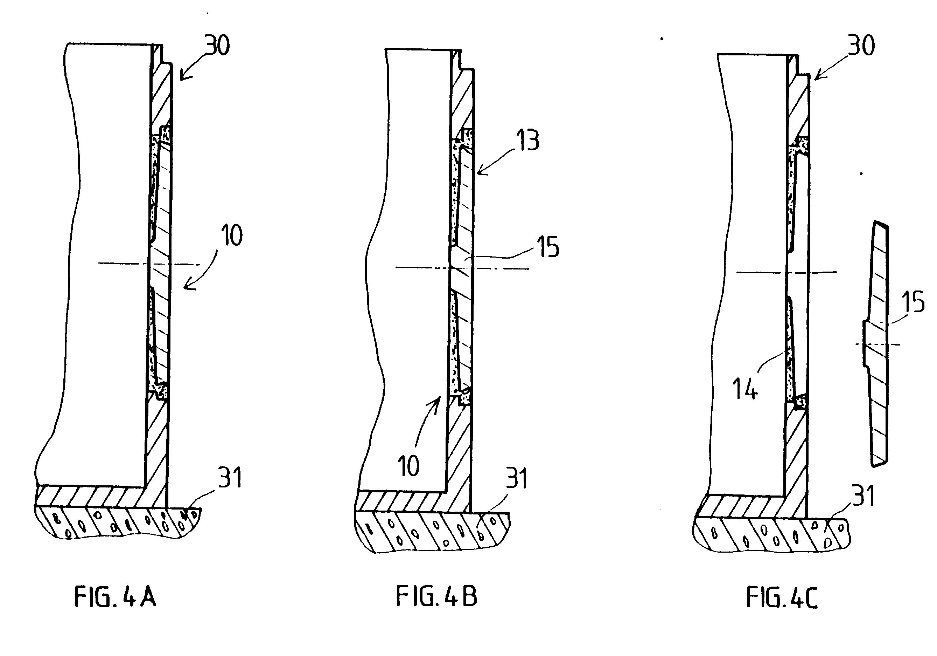

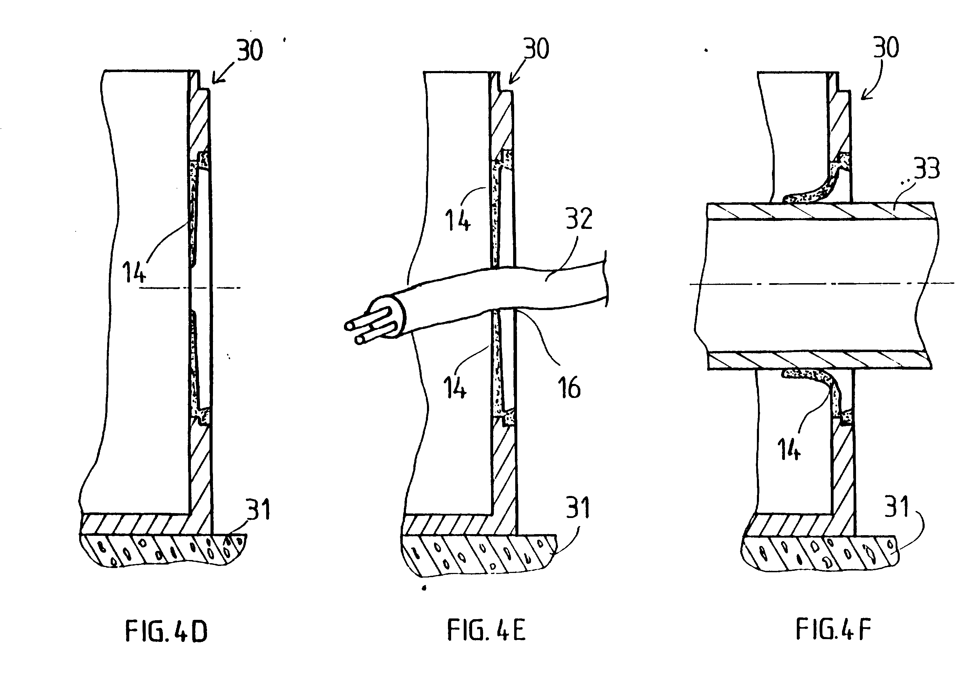

Dans la réalisation selon la figure 1, par contre, la membrane souple est avantageusement surmoulée par-dessus l'ouverture de l'enveloppe, prévue à cet effet.
L'utilisation pratique du dispositif de traversée est illustrée par les figures suivantes. La figure 4A représente une enveloppe 30 fixée contre un mur ou une paroi quelconque 31 et pourvu d'un dispositif de traversée 10 similaire à celui de la figure 1. Comme le montrent les figures 4B et 4C, on repousse vers l'extérieur l'opercule rigide 15 du bouchon de fermeture 13 en appuyant de l'intérieur de l'enveloppe sur le renflement central 18 pour désolidariser ledit opercule de la membrane souple 14. Cette opération pourrait bien entendu être effectuée au moyen d'un tournevis ou de tout autre outil courant dont dispose l'opérateur. La figure 4D montre l'enveloppe 30 tel qu'il se présente lorsque l'opercule rigide a été retiré.

La figure 4E montre l'enveloppe 30 utilisée pour raccorder un fil électrique 32 à travers le dispositif de traversée étanche. Dans ce cas, le fil a un diamètre égal ou légèrement supérieur à celui de l'ouverture centrale 16 de la membrane souple 14.

La figure 4F montre l'enveloppe 30 utilisée pour le raccordement d'un conduit 33 éventuellement destiné à contenir des fils électriques ou similaires. Dans ce cas, le diamètre du conduit est largement supérieur à celui de l'ouverture centrale 16 de la membrane souple 14. Cette différence de diamètre est absorbée par la membrane souple elle-même qui se replie autour du conduit pour constituer une lèvre d'appui assurant l'étanchéité entre ce conduit et l'enveloppe.

Dans les deux cas, le raccordement étanche a pu être réalisé sans recours à un quelconque outil spécial et notamment à un outil de coupe, ce qui correspond au but fixé par la présente invention.

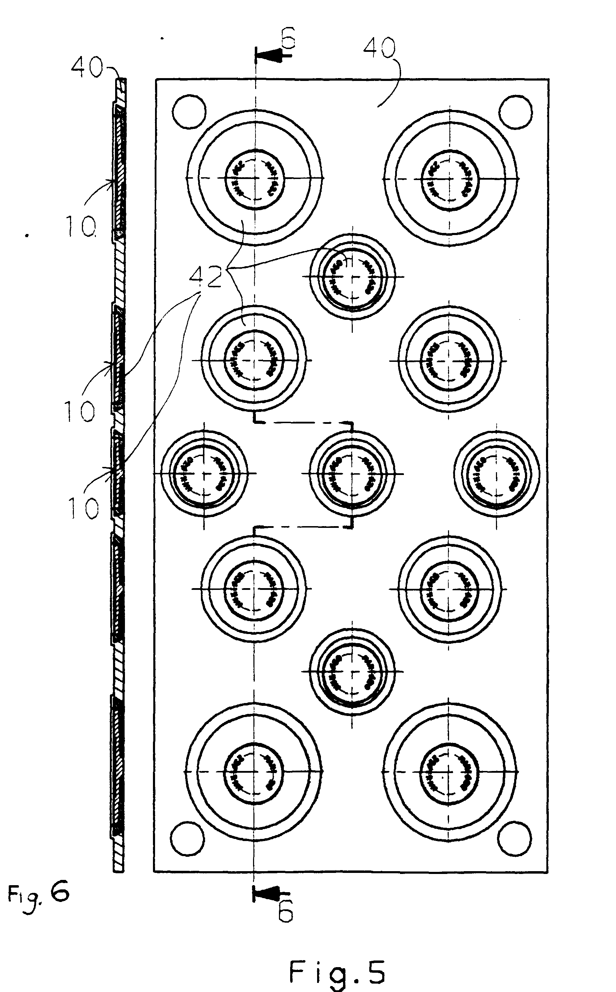

En référence aux figures 5 et 6, une plaque 40 passe-câbles comporte une pluralité d'entrées 42 de diamères différents, équipées chacune d'un dispositif de traversée 10 étanche de type illustré à la figure 1. Un exemple de réalisation d'une telle plaque 40 consiste à placer les entrées de différents diamètres dans l'empreinte d'un moule de forme conjuguée à la plaque, et de surmouler lesdites entrées avec une matière thermoplastique. La plaque 40 peut être montée sur une paroi d'une cellule ou un coffret électrique pour constituer une paroi de traversée multiple.

## Revendications

1. Dispositif de traversée étanche à membrane souple, notamment pour une enveloppe d'un équipement électrique, autorisant le passage étanche d'au moins un élément de raccordement, notamment d'un conduit ou d'un câble, ce dispositif comprenant un bouchon de fermeture inséré dans une première ouverture (11) de forme conjuguée ménagée dans au moins une paroi (12) de ladite enveloppe,
caractérisé en ce que ledit bouchon de fermeture (13) comporte une membrane souple (14) ayant au moins une deuxième ouverture centrale (16) de diamètre inférieur à celui de la première ouverture (11), et un bourrelet (17) périphérique annulaire, à l'intérieur duquel est inséré un opercule rigide (15) comportant un renflement central (18) agencé pour être logé dans la deuxième ouverture centrale (16) de la membrane souple (14), la somme des épaisseurs de la membrane souple (14) et de l'opercule rigide (15) étant sensiblement égale à l'épaisseur de la paroi (12) de l'enveloppe.

2. Dispositif selon la revendication 1, caractérisé en ce que l'ensemble membrane (14) associée à l'opercule (15) est monté sur une bague d'emboîtement (20) constituant une pièce intermédiaire entre le bouchon de fermeture (13) et la paroi (12) de l'enveloppe, et que ladite bague d'emboîtement (20) comporte des moyens de liaison (21) avec la paroi (12) de l'enveloppe.

3. Dispositif selon la revendication 2, caractérisé en ce que lesdits moyens de liaison comprennent une gorge (22) périphérique agencée pour recevoir une protubérance complémentaire solidaire de la paroi de l'enveloppe, et une rampe (23) agencée pour permettre une mise en place par emboîtement de cette bague dans l'ouverture (11) de l'enveloppe, la dimension de la bague étant supérieure à la dimension de la paroi élastomère.

4. Dispositif selon la revendication 1, caractérisé en ce que ledit opercule (15) rigide est réalisé en une matière synthétique ayant plus ou moins d'adhérence par rapport à la membrane souple (14).

5. Dispositif selon la revendication 1, caractérisé en ce que les dimensions transversales du renflement central (18) de l'opercule rigide (15) sont légèrement supérieures à celles de la deuxième ouverture (16) de la membrane souple (14), ledit opercule étant rendu solidaire de ladite membrane par emboîtement dudit renflement (18) dans ladite deuxième ouverture.

6. Dispositif selon la revendication 1, caractérisé en ce que bourrelet annulaire (17) de la membrane (14) présente une paroi intérieure (19) légèrement inclinée qui assure la retenue par friction de l'opercule rigide (15).

7. Dispositif selon la revendication 1, caractérisé en ce que la membrane (14) souple est surmoulée par dessus la première ouverture (11) de l'enveloppe.

8. Dispositif selon la revendication 1, caractérisé en ce que une collerette (40) protubérante de forme annulaire est ménagée au droit de l'ouverture (11), sur la face externe de l'enveloppe (12) pour renforcer la tenue mécanique de l'opercule (15) dans le bouchon de fermeture (13).

## Patentansprüche

1. Wasserdichte Durchführungsvorrichtung mit biegsamer Membran, insbesondere für ein Gehäuse eines elektrischen Betriebsmittels, die eine abdichtende Durchführung mindestens eines Anschlußelements, insbesondere eines Instfllationsrohrs oder Kabels erlaubt, wobei diese Vorrichtung einen Verschlußstopfen umfaßt, der in eine erste, in mindestens einer Wand (12) des genannten Gehäuses ausgebildete, zugeordnete Öffnung (11) eingesetzt ist,
dadurch gekennzeichnet, daß der genannte Verschlußstopfen (13) eine biegsame Membran (14) mit mindestens einer zweiten Mittelöffnung (16), deren Durchmesser geringer ist als der Durchmesser der ersten Öffnung (11), sowie einer an ihrem Außenrand ausgebildeten, ringförmigen Schulter (17) umfaßt, auf deren Innenseite ein biegesteifer Einsatz (15) mit einer zum Eingreifen in die zweite Mittelöffnung (16) der biegsamen Membran (14) dienenden Mittelerhebung (18) angeordnet ist, wobei die Summe der Dicken der biegsamen Membran (14) und des biegesteifen Einsatzes (15) annähernd der Dicke der Wand (12) des Gehäuses entspricht.

2. Vorrichtung nach Anspruch 1, dadurch gekennzeichnet, daß die Einheit aus Membran (14) und zugehörigem Einsatz (15) in einen Paßring (20) eingesetzt ist, der ein zwischen dem Verschlußstopfen (13) und der Wand (12) des Gehäuses angeordnetes Zwischenteil bildet, und daß der genannte Paßring (20) Verbindungsmittel (21) zur Verbindung mit der Wand (12) des Gehäuses aufweist.

3. Vorrichtung nach Anspruch 2, dadurch gekennzeichnet, daß die genannten Verbindungsmittel eine umlaufende Nut (22) zur Aufnahme eines zugeordneten, an der Wand des Gehäuses ausgebildeten Vorsprungs sowie eine Schräge (23) umfassen, die ein Einsetzen dieses Paßrings in die Gehäuseöffnung (11) durch Einrasten erlaubt, wobei die Dicke des Paßrings größer ist als die Dicke der Elastomerwand.

4. Vorrichtung nach Anspruch 1, dadurch gekennzeichnet, daß der genannte biegesteife Einsatz (15) aus einem Kunststoff besteht, der eine stärkere bzw. schwächere Haftung an der biegsamen Membran (14) aufweist.

5. Vorrichtung nach Anspruch 1, dadurch gekennzeichnet, daß die Breite der Mittelerhebung (18) des biegesteifen Einsatzes (15) geringfügig größer ist als die Breite der zweiten Öffnung (16) der biegsamen Membran (14), wobei der genannte Einsatz (15) durch Eingreifen der genannten Erhebung (18) in die genannte zweite Öffnung mit der genannten Membran verbunden ist.

6. Vorrichtung nach Anspruch 1, dadurch gekennzeichnet, daß die genannte ringförmige Schulter (17) der Membran (14) eine leicht geneigte Innenwand (19) aufweist, die den Sitz des biegesteifen Einsatzes (15) durch Reibungswirkung gewährleistet.

7. Vorrichtung nach Anspruch 1, dadurch gekennzeichnet, daß die biegsame Membran (14) über der ersten Öffnung (11) des Gehäuses angeformt ist.

8. Vorrichtung nach Anspruch 1, dadurch gekennzeichnet, daß ein ringförmiger hervorstehender Kragen (40) rechtwinklig zur Öffnung (11) an der Außenseite der Gehäuses (12) ausgebildet ist, um die mechanische Festigkeit des in den Verschlußstopfen (13) eingesetzten Einsatzes (15) zu verstärken.

## Claims

1. A tightly sealed bushing device with flexible membrane, notably for an enclosure of a piece of electrical equipment, allowing the tight passage of at least one connecting element, notably a duct or a cable, this device comprising a sealing plug inserted in a first opening (11) of conjugate shape arranged in at least one wall (12) of said enclosure,
characterized in that said sealing plug (13) comprises a flexible membrane (14) having at least a second central opening (16) of a diameter smaller than that of the first opening (11), and an annular peripheral (17) rim inside which a rigid cap (15) is inserted comprising a central swelling (18) arranged to be housed in the second central opening (16) of the flexible membrane (14), the sum of the thicknesses of the flexible membrane (14) and of the rigid cap (15) being appreciably equal to the thickness of the wall (12) of the enclosure.

2. The device according to claim 1, characterized in that the assembly formed by the membrane (14) associated to the cap (15) is mounted on a clamping ring (20) constituting an intermediate part between the sealing plug (13) and the wall (12) of the enclosure, and that said clamping ring (20) comprises joining means (21) with the wall (12) of the enclosure.

3. The device according to claim 2, characterized in that said joining means comprise a peripheral groove (22) arranged to receive a complementary protuberance securedly united to the wall of the enclosure, and a ramp (23) arranged to enable fitting by engagement of this ring in the opening (11) of the enclosure, the size of the ring being larger than the size of the elastomer wall.

4. The device according to claim 1, characterized in that said rigid cap (15) is made of a synthetic material having more or less adherence with respect to the flexible membrane (14).

5. The device according to claim 1, characterized in that the transverse dimensions of the central swelling (18) of the rigid cap (15) are slightly larger than those of the second opening (16) of the flexible membrane (14), said cap being securedly united to said membrane by engagement of said swelling (18) in said second opening.

6. The device according to claim 1, characterized in that the annular rim (17) of the membrane (14) presents a slightly inclined inside wall (19) which achieves gripping by friction of the rigid cap (15).

7. The device according to claim 1, characterized in that the flexible membrane (14) is overcast over the first opening (11) of the enclosure.

8. The device according to claim 1, characterized in that an annular-shaped protuberant collar (40) is arranged facing the opening (11), on the external face of the enclosure (12) to increase the mechanical strength of the cap (15) in the sealing plug (13).
